# EUROPEAN PATENT APPLICATION

(11) **EP 4 742 749 A1**
(43) Date of publication of application: **13.05.2026**
(21) Application number: 24211364.5
(22) Date of filing: 07.11.2024
(51) Int. Cl.: H04W 36/00

(54) **DUAL CONNECTIVITY-BASED SECONDARY CELL GROUP CHANGE**

(71) Applicant: Nokia Technologies Oy, 02610 Espoo (FI)
(72) Inventor: GÜRSU, Halit Murat, Munich (DE); SELVAGANAPATHY, Srinivasan, Bangalore (IN); STANCZAK, Jedrzej, Wroclaw (PL); KORDYBACH, Krzysztof, Wroclaw (PL); ARJONA, Andres, Tokyo (JP)
(74) Representative: Nokia EPO representatives

(57) **Abstract**

Example embodiments of the present disclosure are directed to a dual connectivity-based (DC-based) secondary cell group change. A method comprises receiving, from a first network device, an inter-secondary node switching configuration for a dual connectivity-based secondary cell group change; performing at least one measurement related to a second cell provided by a second network device; reporting the at least one measurement to the first network device; receiving, from the first network device, an indication to initiate the dual connectivity-based secondary cell group change; initiating a cell switch from a first cell provided by the first network device to the second cell based on the inter-secondary node switching configuration; adding the second cell into a secondary cell group based on the indication; and deactivating a master cell group including the first cell.

## Description

### FIELD

Various example embodiments generally relate to the field of telecommunication and in particular, to methods, devices, apparatuses and computer readable storage medium for a dual connectivity-based (DC-based) secondary cell group change.

### BACKGROUND

When user equipment (UE) moves from a coverage area of one cell to another cell, a serving cell change needs to be performed at some time point. Lower-layer triggered mobility (LTM), also known as Layer 1 (L1)/Layer 2 (L2) based inter-cell mobility, has been introduced to enable a serving cell change via L1/L2 signaling. The LTM helps to reduce latency, overhead and interruption time during handover.

### SUMMARY

In a first aspect, there is provided a user device. The user device comprises: at least one processor; and at least one memory storing instructions that, when executed by the at least one processor, cause the user device operating in a single connectivity mode at least to: receive, from a first network device, an indication to initiate a dual connectivity-based secondary cell group change; add a first cell or a second cell into a secondary cell group based on the indication, the first cell being provided by the first network device and serving the user device, and the second cell being provided by the second network device; and deactivate a master cell group including the first cell.

In a second aspect, there is provided a first network device. The first network device comprises: at least one processor; and at least one memory storing instructions that, when executed by the at least one processor, cause the first network device at least to: receive, from a user device operating in a single connectivity mode, at least one measurement related to a second cell provided by a second network device; determine, based on the at least one measurement, to initiate a dual connectivity-based secondary cell group change for the user device; send, to the user device, an indication to initiate the dual connectivity-based secondary cell group change; and enter the user device from the single connectivity mode to a dual connectivity mode, based on the determining.

In a third aspect, there is provided a second network device. The second network device comprises: at least one processor; and at least one memory storing instructions that, when executed by the at least one processor, cause the second network device at least to: receive, from a first network device, a request for secondary node addition, the request indicating that the secondary node addition is used for a dual connectivity-based secondary cell group change of a user device; and determine, based on the request, that a master cell group is to be deactivated by the user device for the dual connectivity-based secondary cell group change.

In a fourth aspect, there is provided a method. The method comprises: receiving, from a first network device, an indication to initiate a dual connectivity-based secondary cell group change; adding a first cell or a second cell into a secondary cell group based on the indication, the first cell being provided by the first network device and serving the user device, and the second cell being provided by the second network device; and deactivating a master cell group including the first cell.

In a fifth aspect, there is provided a method. The method comprises: receiving, from a user device operating in a single connectivity mode, at least one measurement related to a second cell provided by a second network device; determining, based on the at least one measurement, to initiate a dual connectivity-based secondary cell group change for the user device; sending, to the user device, an indication to initiate the dual connectivity-based secondary cell group change; and entering the user device from the single connectivity mode to a dual connectivity mode, based on the determining.

In a sixth aspect, there is provided a method. The method comprises: receiving, from a first network device, a request for secondary node addition, the request indicating that the secondary node addition is used for a dual connectivity-based secondary cell group change of a user device; and determining, based on the request, that a master cell group is to be deactivated by the user device for the dual connectivity-based secondary cell group change.

In a seventh aspect, there is provided a first apparatus. The first apparatus comprises means for receiving, from a first network device, an indication to initiate a dual connectivity-based secondary cell group change; means for adding a first cell or a second cell into a secondary cell group based on the indication, the first cell being provided by the first network device and serving the user device, and the second cell being provided by the second network device; and means for deactivating a master cell group including the first cell.

In an eighth aspect, there is provided a second apparatus. The second apparatus comprises means for receiving, from a user device operating in a single connectivity mode, at least one measurement related to a second cell provided by a second network device; means for determining, based on the at least one measurement, to initiate a dual connectivity-based secondary cell group change for the user device; means for sending, to the user device, an indication to initiate the dual connectivity-based secondary cell group change; and means for entering the user device from the single connectivity mode to a dual connectivity mode, based on the determining.

In a ninth aspect, there is provided a third apparatus. The third apparatus comprises means for receiving, from a first network device, a request for secondary node addition, the request indicating that the secondary node addition is used for a dual connectivity-based secondary cell group change of a user device; and means for determining, based on the request, that a master cell group is to be deactivated by the user device for the dual connectivity-based secondary cell group change.

In a tenth aspect, there is provided a computer readable medium. The computer readable medium comprises instructions stored thereon for causing an apparatus to perform at least the method according to the fourth aspect.

In an eleventh aspect, there is provided a computer readable medium. The computer readable medium comprises instructions stored thereon for causing an apparatus to perform at least the method according to the fifth aspect.

In a twelfth aspect, there is provided a computer readable medium. The computer readable medium comprises instructions stored thereon for causing an apparatus to perform at least the method according to the sixth aspect.

In a thirteenth aspect, there is provided a user device. The user device comprises: at least one processor; and at least one memory storing instructions that, when executed by the at least one processor, cause the user device operating in a single connectivity mode at least to: receive, from a first network device, an indication to initiate a dual connectivity-based secondary cell group change; add a first cell into a secondary cell group based on the indication, the first cell being provided by the first network device and serving the user device; deactivate a master cell group including the first cell; receive, from the first network device, an inter-secondary node switching configuration for the dual connectivity-based secondary cell group change; and switch from the first cell to a second cell based on the inter-secondary node switching configuration, the second cell being provided by a second network device and included in a target secondary cell group.

In a fourteenth aspect, there is provided a first network device. The first network device comprises: at least one processor; and at least one memory storing instructions that, when executed by the at least one processor, cause the first network device at least to: receive, from a user device operating in a single connectivity mode, a measurement report identifying a second cell provided by a second network device; determine, based on the measurement report, to initiate a dual connectivity-based secondary cell group change for the user device; send, to the user device, an indication to initiate the dual connectivity-based secondary cell group change; and send, to the user device, an inter-secondary node switching configuration for the dual connectivity-based secondary cell group change.

In a fifteenth aspect, there is provided a method. The method comprises: receiving, from a first network device, an indication to initiate a dual connectivity-based secondary cell group change; adding a first cell into a secondary cell group based on the indication, the first cell being provided by the first network device and serving the user device; deactivating a master cell group including the first cell; receiving, from the first network device, an inter-secondary node switching configuration for the dual connectivity-based secondary cell group change; and switching from the first cell to a second cell based on the inter-secondary node switching configuration, the second cell being provided by a second network device and included in a target secondary cell group.

In a sixteenth aspect, there is provided a method. The method comprises: receiving, from a user device operating in a single connectivity mode, a measurement report identifying a second cell provided by a second network device; determining, based on the measurement report, to initiate a dual connectivity-based secondary cell group change for the user device; sending, to the user device, an indication to initiate the dual connectivity-based secondary cell group change; and sending, to the user device, an inter-secondary node switching configuration for the dual connectivity-based secondary cell group change.

In a seventeenth aspect, there is provided a first apparatus. The first apparatus comprises means for receiving, from a first network device, an indication to initiate a dual connectivity-based secondary cell group change; means for adding a first cell into a secondary cell group based on the indication, the first cell being provided by the first network device and serving the user device; means for deactivating a master cell group including the first cell; means for receiving, from the first network device, an inter-secondary node switching configuration for the dual connectivity-based secondary cell group change; and means for switching from the first cell to a second cell based on the inter-secondary node switching configuration, the second cell being provided by a second network device and included in a target secondary cell group.

In an eighteenth aspect, there is provided a second apparatus. The second apparatus comprises means for receiving, from a user device operating in a single connectivity mode, a measurement report identifying a second cell provided by a second network device; means for determining, based on the measurement report, to initiate a dual connectivity-based secondary cell group change for the user device; means for sending, to the user device, an indication to initiate the dual connectivity-based secondary cell group change; and means for sending, to the user device, an inter-secondary node switching configuration for the dual connectivity-based secondary cell group change.

In a nineteenth aspect, there is provided a computer readable medium. The computer readable medium comprises instructions stored thereon for causing an apparatus to perform at least the method according to the sixteenth aspect.

In a twentieth aspect, there is provided a computer readable medium. The computer readable medium comprises instructions stored thereon for causing an apparatus to perform at least the method according to the seventeenth aspect.

In a twenty-first aspect, there is provided a user device. The user device comprises at least one processor; and at least one memory storing instructions that, when executed by the at least one processor, cause the user device operating in single connectivity at least to: receive, from a first network device, an inter-secondary node switching configuration for a dual connectivity-based secondary cell group change; perform at least one measurement related to a second cell provided by a second network device; report the at least one measurement to the first network device; receive, from the first network device, an indication to initiate the dual connectivity-based secondary cell group change; initiate a cell switch from a first cell provided by the first network device to the second cell based on the inter-secondary node switching configuration; add the second cell into a secondary cell group based on the indication; and deactivate a master cell group including the first cell.

In a twenty-second aspect, there is provided a first network device. The first network device comprises: at least one processor; and at least one memory storing instructions that, when executed by the at least one processor, cause the first network device at least to: receive, from a user device operating in a single connectivity mode, a measurement report identifying a second cell provided by a second network device; determine, based on the measurement report, to initiate a dual connectivity-based secondary cell group change for the user device; send, to the user device, an inter-secondary node switching configuration for the dual connectivity-based secondary cell group change, based on the determining; receive, from the first network device, at least one measurement related to the second cell; and send, to the user device, an indication to initiate the dual connectivity-based secondary cell group change to activate a secondary cell group for the user device, based on the at least one measurement.

In a twenty-third aspect, there is provided a method. The method comprises: receiving, from a first network device, an inter-secondary node switching configuration for a dual connectivity-based secondary cell group change; performing at least one measurement related to a second cell provided by a second network device; reporting the at least one measurement to the first network device; receiving, from the first network device, an indication to initiate the dual connectivity-based secondary cell group change; initiating a cell switch from a first cell provided by the first network device to the second cell based on the inter-secondary node switching configuration; adding the second cell into a secondary cell group based on the indication; and deactivating a master cell group including the first cell.

In a twenty-fourth aspect, there is provided a method. The method comprises: receiving, from a user device operating in a single connectivity mode, a measurement report identifying a second cell provided by a second network device; determining, based on the measurement report, to initiate a dual connectivity-based secondary cell group change for the user device; sending, to the user device, an inter-secondary node switching configuration for the dual connectivity-based secondary cell group change, based on the determining; receiving, from the first network device, at least one measurement related to the second cell; and sending, to the user device, an indication to initiate the dual connectivity-based secondary cell group change to activate a secondary cell group for the user device, based on the at least one measurement.

In a twenty-fifth aspect, there is provided a first apparatus. The first apparatus comprises means for receiving, from a first network device, an inter-secondary node switching configuration for a dual connectivity-based secondary cell group change; means for performing at least one measurement related to a second cell provided by a second network device; means for reporting the at least one measurement to the first network device; receiving, from the first network device, an indication to initiate the dual connectivity-based secondary cell group change; means for initiating a cell switch from a first cell provided by the first network device to the second cell based on the inter-secondary node switching configuration; means for adding the second cell into a secondary cell group based on the indication; and deactivating a master cell group including the first cell.

In a twenty-sixth aspect, there is provided a second apparatus. The second apparatus comprises means for receiving, from a user device operating in a single connectivity mode, a measurement report identifying a second cell provided by a second network device; means for determining, based on the measurement report, to initiate a dual connectivity-based secondary cell group change for the user device; means for sending, to the user device, an inter-secondary node switching configuration for the dual connectivity-based secondary cell group change, based on the determining; means for receiving, from the first network device, at least one measurement related to the second cell; and means for sending, to the user device, an indication to initiate the dual connectivity-based secondary cell group change to activate a secondary cell group for the user device, based on the at least one measurement.

In a twenty-seventh aspect, there is provided a computer readable medium. The computer readable medium comprises instructions stored thereon for causing an apparatus to perform at least the method according to the twenty-eighth aspect.

In a twenty-eighth aspect, there is provided a computer readable medium. The computer readable medium comprises instructions stored thereon for causing an apparatus to perform at least the method according to the twenty-ninth aspect.

It is to be understood that the Summary section is not intended to identify key or essential features of embodiments, nor is it intended to be used to limit the scope. Other features will become easily comprehensible through the following description.

### BRIEF DESCRIPTION OF THE DRAWINGS

Some example embodiments will now be described with reference to the accompanying drawings, where:
FIG. 1 illustrates an example communication environment for a serving cell change by LTM in which example embodiments can be implemented.
FIG. 2 illustrates an example next generation radio access network (NG-RAN) architecture.
FIG. 3 illustrates an example process of inter-CU LTM cell switch according to some example embodiments.
FIG. 4 illustrates an example signaling flow of a DC-based SCG change according to some example embodiments.
FIG. 5 illustrates an example signaling flow of the DC-based SCG change according to some other example embodiments.
FIG. 6 illustrates an example scenario of the DC-based SCG change according to some example embodiments.
FIG. 7 illustrates an example signaling flow of the DC-based SCG change in an example scenario according to some example embodiments.
FIG. 8 illustrates an example process of the DC-based SCG change in an example scenario according to some example embodiments.
FIG. 9 illustrates another example scenario of the DC-based SCG change according to some example embodiments.
FIG. 10 illustrates an example signaling flow of the DC-based SCG change in another example scenario according to some example embodiments.
FIG. 11 illustrates an example process of the DC-based SCG change in another example scenario according to some example embodiments.
FIG. 12 illustrates a flowchart of an example method implemented at a user device in accordance with some example embodiments.
FIG. 13 illustrates a flowchart of an example method implemented at a first network device in accordance with some example embodiments.
FIG. 14 illustrates a flowchart of an example method implemented at a second network device in accordance with some example embodiments.
FIG. 15 illustrates a flowchart of an example method implemented at a user device in accordance with some example embodiments.
FIG. 16 illustrates a flowchart of an example method implemented at a location service device of a first network device in accordance with some example embodiments.
FIG. 17 illustrates a flowchart of an example method implemented at a user device in accordance with some example embodiments.
FIG. 18 illustrates a flowchart of an example method implemented at a first network device in accordance with some example embodiments.
FIG. 19 illustrates a simplified block diagram of a device that is suitable for implementing example embodiments.
FIG. 20 illustrates an example of the computer readable medium which may be in form of CD, DVD or other optical storage disk.

### DETAILED DESCRIPTION

Principle will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second," ..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a user device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols and the like, wireless local network communication protocols such as Institute for Electrical and Electronics Engineers (IEEE) 802.11 and the like, and/or any other protocols either currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future. Embodiments may be applied in various communication systems. Given the rapid development in communications, there will of course also be future type communication technologies and systems with which the present disclosure may be embodied. It should not be seen as limiting the scope to only the aforementioned system.

As used herein, the term "network device" refers to a node in a communication network via which a user device accesses the network and receives services therefrom. The network device may comprise a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, the network device may utilize a radio access network (RAN) split architecture where the network device includes a Centralized Unit (CU) and a Distributed Unit (DU).

The term "user device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The user device may also correspond to a Mobile Termination (MT) part of an IAB node (e.g., a relay node). In the following description, the terms "terminal device", "user device", "user equipment" and "UE" may be used interchangeably.

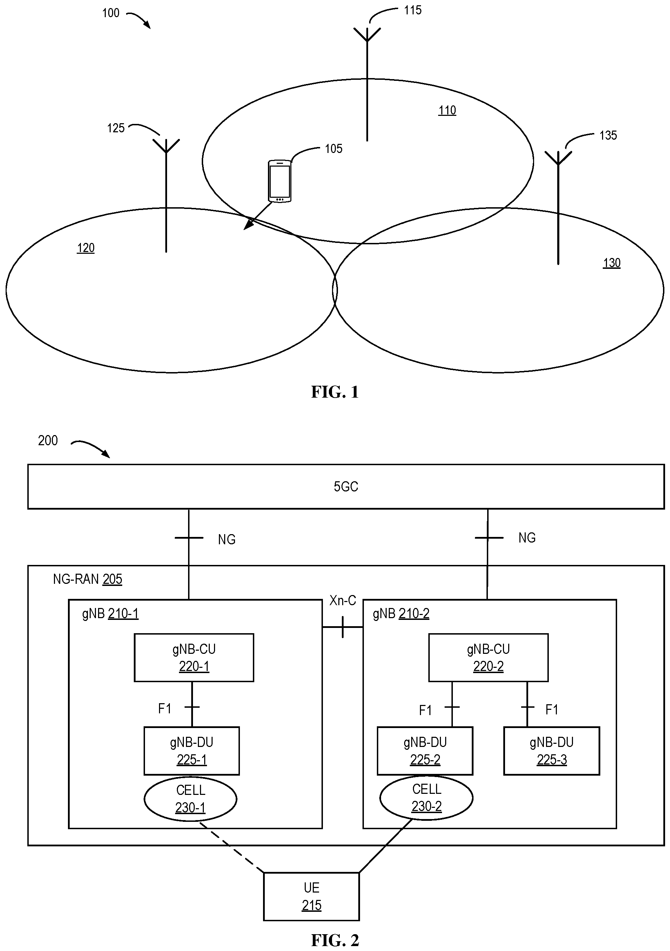

FIG. 1 illustrates an example communication environment 100 in which example embodiments can be implemented. In the communication environment 100, there may be a user device 105 (such as a UE). The user device 105 is currently located in a first cell 110 (also referred to as "serving cell 110") which is provided by a first network device 115 (also referred to as "serving network device 115", such as a serving gNB). As the user device 105 moves, there may be candidate target cells to which the user device 105 may be handed over. For example, a second cell 120 provided by a second network device 125 and a third cell 130 provided by a third network device 135 may be considered as candidate target cells or target cells. Accordingly, the second network device 125 and the third network device 135 may be referred to as target network devices (such as target gNBs).

In some example embodiments, a transmission direction from the first network device 115, the second network device 125 or the third network device 135 to the user device 105 is referred to as a downlink (DL). A transmission direction from the user device 105 to the first network device 115, the second network device 125 or the third network device 135 is referred to as an uplink (UL). In DL, the first network device 115, the second network device 125 or the third network device 135 is a transmitting (TX) device (or a transmitter) and the user device 105 is a receiving (RX) device (or a receiver). In UL, the user device 105 is a TX device (or a transmitter) and the first network device 115, the second network device 125 or the third network device 135 is a RX device (or a receiver).

In the communication environment 100, the user device 105 may operate in either a single connectivity (SC) mode or a dual connectivity (DC) mode. In DC operation, the user device 105 may be served by a master cell group (MCG) and a secondary cell group (SCG). The MCG is a cell group associated with a master node (MN) such as the first network device 115, including a primary cell (PCell) and optional one or more secondary cells (SCells). The SCG is a cell group associated with a secondary node (SN) such as the second network device 125, including a primary secondary cell (PSCell) and optionally one or more SCells.

Radio link failure (RLF) may be declared separately for the MCG and for the SCG. If RLF is detected for the MCG and a fast MCG link recovery is configured and the SCG is not deactivated, then the user device 115 may trigger the fast MCG link recovery. Otherwise, the user device 115 may initiate an RRC connection re-establishment procedure. During the execution of a PSCell addition or a PSCell change, if the RLF is detected for the MCG, the user device 115 may initiate the RRC connection re-establishment procedure.

During the fast MCG link recovery, the user device 115 may deactivate or suspend MCG transmissions for all radio bearers (except for signaling radio bearer 0 (SRB0)) and for backhaul (BH) RLC channels (if any). The user device 115 may report the failure, e.g. with a *MCGFailureInformation* message, to the MN via the SCG, using an SCG leg of split SRB1 or SRB3. SRB1 is a signaling radio bearer for the MN, which is security protected, and SRB3 is a signaling radio bearer for the SCG. In other words, the user device 115 may use an SCG link as a second link to indicate to a network that an MCG link has failed and needs to be reconfigured.

In some example embodiments, the first network device 115, the second network device 125 or the third network device 135 may operate as gNBs that utilizes a radio access network (RAN) split architecture. FIG. 2 illustrates an example overall NG-RAN architecture 200. A NG-RAN 205 via an NG may comprise one or more gNBs (for example, gNBs 210-1 and 210-2), which provides network access to a UE 215 by providing control and user plane protocol termination. A gNB may comprise a gNB-CU and one or more gNB-DU(s). For example, as shown in FIG. 2, the gNB 210-1 may comprise a gNB-CU 220-1 and a gNB-DU 225-1. The gNB 210-2 may comprise a gNB-CU 220-2 and two gNB-DUs 225-2 and 225-3. A gNB-CU and a gNB-DU may be connected via an F1 interface. One gNB-DU may be connected to one or more gNB-CU(s).

The gNB-CU 220-1 or 220-2 may host radio resource control (RRC), service data adaption protocol (SDAP) and packet data convergence protocol (PDCP) layers or entities of the gNB 210-1 or 210-2. The gNB-CU 220-1 or 220-2 may control the operation of the corresponding gNB-DUs. The gNB-DU 225-1, 225-2 or 225-3 may host radio link control (RLC), media access control (MAC) and physical (PHY) layers or entities of the gNB 210-1 or 210-2. The operation of the gNB-DU 225-1, 225-2 or 225-3 may be partially controlled by the gNB-CU 220-1 or 220-2. One gNB-DU may support one or multiple cells. One cell may be supported by only one gNB-DU.

The gNB-CU may comprise a gNB-CU-control plane (gNB-CU-CP) that hosts the RRC layer of the gNB-CU and a control plane part of the PDCP layer of the gNB-CU. The gNB-CU may further comprise a gNB-CU-user plane (gNB-CU-UP) that hosts a user plane part of the PDCP and SDAP layers of the gNB-CU. The gNB-CU-CP may be connected with the gNB-CU-UP via an E1 interface. Further, the gNB-CU-CP may terminate an F1-C interface connected with the gNB-DU, and the gNB-CU-UP may terminate an F1-U interface connected with the gNB-DU. For the purpose of discussion, a gNB-CU may also be referred to as a CU, and a gNB-DU may also be referred to as a DU.

In the architecture 200, an LTM cell change is supported for the UE 215. For example, a decision about the cell change may be made at the MAC layer in the DU based on L1/L2 measurements. The LTM cell change may comprise an intra-CU LTM cell change where a source DU and a target DU may share or belong to the same CU. In a scenario of the intra-CU LTM cell change, RRC or data radio bearers (DRBs) terminate at the same gNB-CU. The LTM cell change may alternatively comprise an inter-CU LTM cell change where a source DU and a target DU belong to a source CU and a target CU, respectively. The term "intra-CU LTM" may also be referred as "intra-gNB LTM" or "intra-gNB-CU LTM" that involves the LTM occurring between different DUs in the same CU of a gNB. The term "inter-gNB LTM" may also be referred as "inter-gNB LTM" or "inter-gNB-CU LTM" that involves the LTM occurring between different CUs of gNBs. The term "cell change" may also be referred to as "cell switch" or "cell switching".

In some example embodiments, as shown in FIG. 2, the UE 215 is originally connected to the DU 225-1 of the gNB 210-1, where the DU 225-1 supports a cell 230-1. The DU 225-1 may establish an F1-C interface with a CU-CP of the gNB 210-1 and an F1-U interface with a CU-UP of the gNB 210. As mentioned above, the CU 220-1 hosts the PDCP layer of the gNB 210-1 while the DU 225-1 hosts the RLC layer of the gNB 210-1.

As the UE 215 moves towards a cell 230-2 supported by the DU 225-2, an inter-CU LTM cell switch may be performed. After the inter-CU LTM cell switch, the UE 215 can be connected to the DU 225-2 of the gNB 210-2. The DU 225-2 may establish an F1-C interface with a CU-CP of the gNB 210-2 and an F1-U interface with a CU-UP of the gNB 210-2. A PDCP entity may be re-established by the CU 220-2, and a RLC entity may be reestablished by the DU 225-2.

In the above procedure of the inter-CU LTM cell switch or cell change, a security key may need to be updated after the cell change. The update of the security key may result in PDCP re-establishment as the new PDCP will start ciphering packets using the new key. The PDCP re-establishment may break PDCP and RLC continuity and require the PDCP and RLC entities to be re-established. This may also increase re-configuration time of a UE as a new key has to be configured by the UE. In addition, in the inter-CU LTM, switching of RRC/DRBs to the target gNB-CU may have the following downsides or complexities: full L2 reset is required, path switch/data forwarding is required, handling of subsequent mobility is not straightforward, and large changes of the standard specifications are needed.

In accordance with some example embodiments, there is provided a solution of a DC-based SCG change. The term "DC-based SCG change" will/may be also referred as "inter-CU LTM", "inter-CU LTM cell switch", "anchored inter-CU LTM", "DC-based LTM", "MCG de-activated DC operation", "SCG only LTM operation" or "DC based SCG only LTM operation". In this solution, for an inter-CU LTM cell switch, the user device 105 may be switched from a SC operation to a DC operation. For example, a target configuration for the inter-CU LTM cell switch may be prepared as a DC configuration with a serving cell as a PCell and a target cell as a PSCell.

In some example embodiments, this DC configuration for the inter-CU LTM cell switch differs from a conventional DC configuration. For example, when a target PSCell configuration or a target SCG configuration is applied, the following changes are applicable compared to the conventional DC configuration: the user device 105 may stop radio link monitoring and beam failure detection (BFD) on an MCG after the PSCell is successfully added to SCG; the user device 105 may stop MCG measurement configuration and reporting; and the user device 105 may keep using a PDCP entity of the MN but add RLC, MAC and PHY entities of the SN. In some example embodiments, a PCell configuration or an MCG configuration may be maintained in a suspended state, which means that the PCell configuration or the MCG configuration is not used actively, but kept stored at the user device 105. In one alternative, when subsequent inter-CU LTM cell switch is triggered towards the PCell, the user device 105 may activate the PCell configuration and suspend the SCG configuration which is similar to the behaviors of the user device 105 in the previous cell switch towards the PSCell.

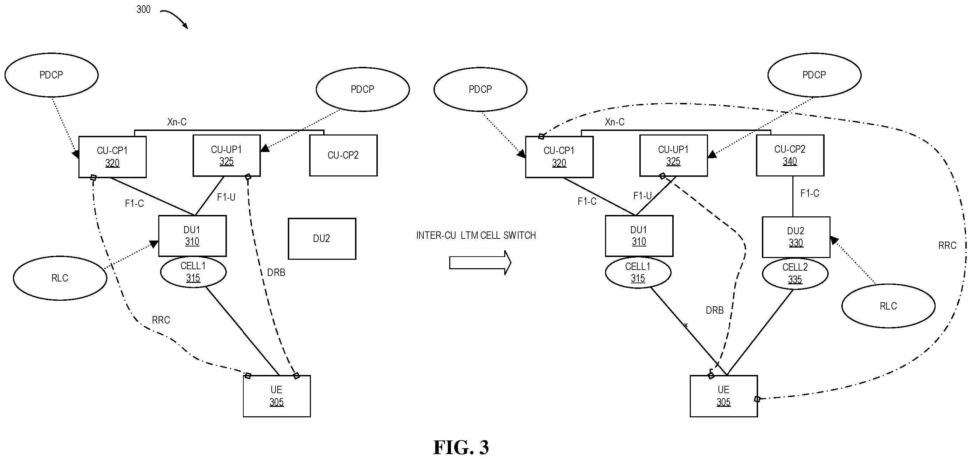

By way of example, an example process 300 of inter-CU LTM cell switch will be described below with reference to FIG. 3. As shown in FIG. 3, a UE 305 is originally connected to a DU1 310 in a single connectivity (SC) mode where the DU1 310 provides a cell1 315. The DU1 310 may establish an F1-C interface with CU-CP1 320 and an F1-U interface with a CU-UP1 325. An RRC connection may be established between the UE 305 and the CU-CP1 320, and a DRB connection may be established between the UE 305 and the CU-UP1 325. A PDCP layer is terminated at the CU-CP1 320 and the CU-UP1 325 while an RLC layer is terminated at the DU1 310. After the inter-CU LTM cell switch is triggered, the UE 305 is connected with the DU1 310 (in other words, gNB1 in PCell of MCG) and a DU2 330 in a DC node where the DU1 310 provides the cell1 315 as a PCell of an MCG and the DU2 330 provides a cell2 335 as a PSCell of an SCG. As shown, the PDCP layer is still terminated at the CU-CP1 320 and the CU-UP1 325, but the RLC layer is changed to be terminated at the DU2 330.

In this way, security and PDCP may be anchored on the MN (for example, a gNB hosting the CU-CP1 320 and the CU-UP1 325), and therefore no security reset and PDCP reset are needed, thereby reducing cell switch latency and improving cell switch efficiency. Subsequently, a radio link (for example, between the UE 305 and the DU2 330) may be flexibly changed over a PSCell change that may be enabled over inter-SN LTM.

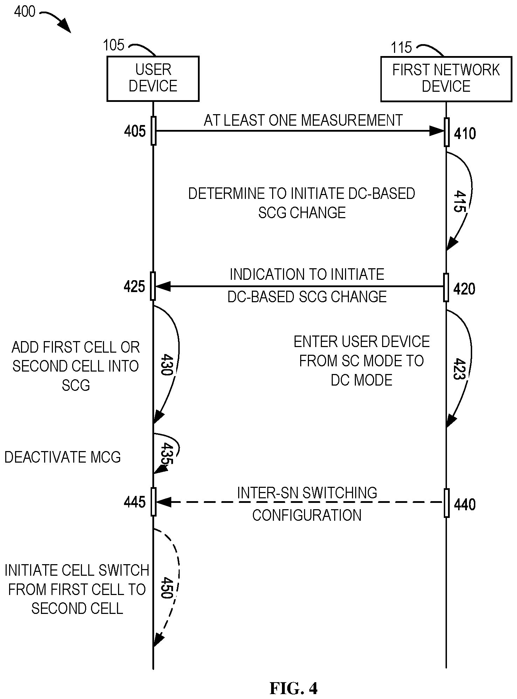

Some example embodiments will be described in detail below with reference to FIGS. 4 to 11.

Reference is now made to FIG. 4, which illustrates an example signaling flow 400 of the DC-based SCG change according to some example embodiments. The signaling flow 400 involves the user device 105 and the first network device 115 that may operate, in the beginning, as a source MN or a serving MN of the user device 105.

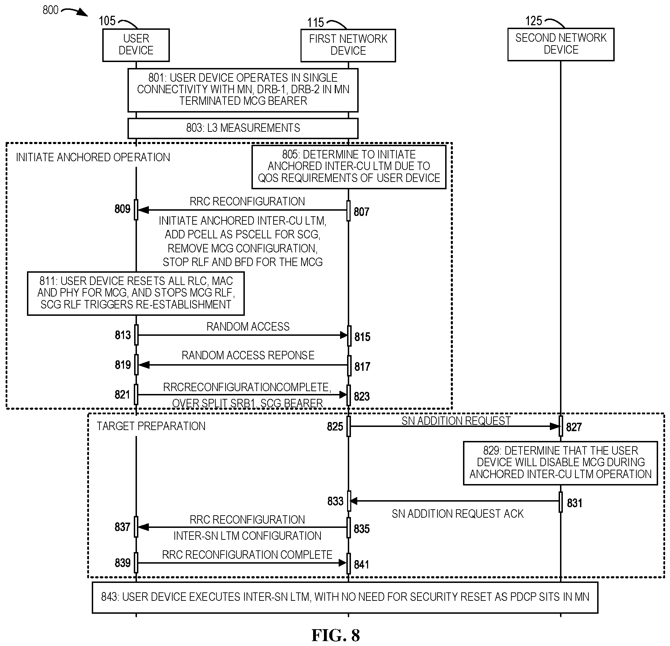

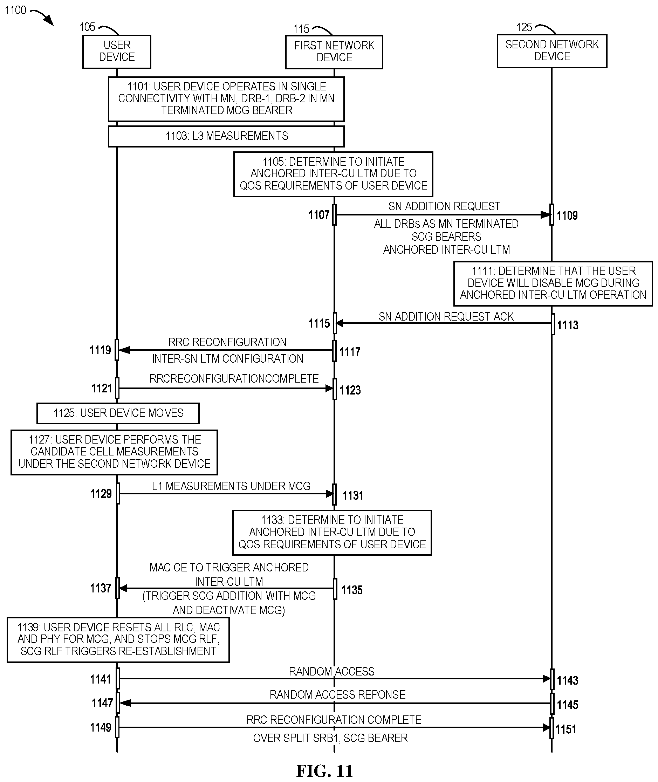

As shown in FIG. 4, the first network device 115 sends (420), to the user device 105 operating in a SC mode, an indication to initiate a DC-based SCG change. Correspondingly, the user device 105 receives (425) from the first network device 115, the indication to initiate the DC-based SCG change. The indication may be sent to the user device 105 via at least one of RRC signaling or MAC signaling. Some example embodiments in this regard will be detailed in the following paragraphs with reference to FIGS. 8 and 11.

Based on the indication, the user device 105 adds (430) the first cell 110 or the second cell 120 into an SCG. Thus, the user device 105 may switch from an SC operation to a DC operation, for example, using a procedure similar to that as shown in FIG. 3. In another aspect, the first network device 115 enters (423) the user device 105 from the SC mode to a DC mode (or converts the SC configuration of the UE to DC configuration). In a scenario of cell switch from the first cell 110 provided by the first network device 115 to the second cell 120 provided by the second network device 125, an MCG for the user device 105 includes the first cell 110 (for example as a PCell) provided by the first network device, and a SCG for the user device 105 includes the second cell 120 (for example as a PSCell) provided by the second network device 125 that may operate as a target SN of the user device 105. The target SN can be considered target MN in a conventional mobility procedure where DC based SCG procedure is not used. The user device 105 deactivates (435) the MCG including the first cell 110. For example, the UE may add the first cell into SCG, and then perform the cell switch from the first cell to the second cell. As another example, the UE may initiate the cell switch from the first cell to the second cell and add the second cell into SCG during the cell switch.

Deactivation of the MCG may comprise at least one of: resetting at least one of a radio link control entity, a media access control entity or a physical layer entity for the master cell group; stopping at least one of radio link monitoring and related timers or radio link failure detection for the master cell group; stopping beam failure detection for the master cell group; stopping at least one measurement or all measurements on the master cell group; converting a signaling radio bearer for the master cell group to a split bearer for both the master cell group and the secondary cell group, wherein a part of the split bearer corresponding to the master cell group is disabled.

It may exceed the capability of the user device 105 to keep combined MCG and SCG configurations. However, the user device 105 is capable or is assumed to be capable of keeping either of the MCG or SCG configuration. The UE capability to indicate the support of the new feature can be a new capability. The UE capability to indicate the support of the new feature can be a combination of existing capabilities. The UE capability to indicate the support of the new feature can be a subset of the existing capabilities. According to some example embodiments, the DC framework is used but only one link is active at a time for the user device 105. As such, the user device 105 may keep MCG terminated bearers even if the user device 105 only has a single transceiver for one link or is capable of having only one link active. Thus, there is no need for the user device 105 to change the termination point for PDCP. In this case, the user device 105 may maintain a PDCP entity for the MCG. As a result, there is no need for a security key change, PDCP reestablishment and a path switch, thereby improving the cell switch efficiency.

For example, the indication to initiate a DC-based SCG change may be referred to as DC-based SCG change configuration. The configuration may comprise at least one of: instructions to add the first cell into SCG; instructions to add the second cell into SCG; instructions to deactivate the MCG including the first cell; instructions to trigger a re-establishment procedure based on detecting an RLF for the SCG; instructions to consider SCG RLF as MCG RLF.

In some example embodiments, the user device 105 may, based on the indication to initiate a DC-based SCG change, trigger a re-establishment procedure based on detecting an RLF for the SCG. As mentioned above, an RLF is declared separately for the MCG and for the SCG. In the case that the DC-based SCG change is configured, the user device 105 may consider an RLF for the SCG (also referred to as an SCG RLF) as an RLF for the MCG (also referred to as a MCG RLF) and then trigger a re-establishment procedure based on detecting an SCG RLF. In this way, even if the MCG is suspended and (only) the SCG is active, the SCG RLF, like the MCG RLF, may trigger a re-establishment procedure. If the DC-based SCG change is not configured, the user device 105 may initiate an SCG failure information procedure to report the SCG RLF, for example, as specified in the standards.

In some example embodiments, based on the indication to initiate a DC-based SCG change, the user device 105 may reset at least one of a RLC entity, a MAC entity or a PHY layer entity for the MCG. Alternatively, or in addition, the user device 105 may stop at least one of radio link monitoring or RLF detection for the MCG. Alternatively, or in addition, the user device 105 may stop beam failure detection for the MCG. The stopping of the monitoring and/or detection may avoid triggering a failure recovery and then breaking the operation of the user device 105, thereby increasing communication efficiency. Alternatively, or in addition, the user device 105 may stop a measurement on the MCG, for example, thereby saving processing resources and improving resource utilization at the user device 105.

Alternatively, or in addition, the user device 105 may convert an SRB (for example, SRB1) for the MCG to a split bearer for both the MCG and the SCG, where a part of the split bearer corresponding to the MCG is disabled. In some example embodiments, the user device 105 may need to be configured with a split bearer for SRB1. In some example embodiments, the user device 105 may need to convert all bearers to MN terminated SCG bearers. In this case, user plane packets may be anchored at the first network device 115 (which provides an MCG PDCP entity) while packets may be routed to target cells as split bearer traffic or SCG bearer traffic.

In some example embodiments, as shown in FIG. 4, before the user device 105 receives (420) the indication to initiate a DC-based SCG change, the user device 105 may perform at least one measurement related to the second cell 120 and report (405) the at least one measurement to the first network device 115. Correspondingly, the first network device 115 may receive (410), from the user device 105, the at least one measurement related to the second cell 120. Then, the first network device 115 may determine (415), based on the at least one measurement, to initiate a DC-based SCG change for the user device 105.

In some example embodiments, the determining (415) may be based on a quality-of-service (QoS) requirement of the user device 105. For example, decreased interruption time may be needed for the user device 105 with strict QoS requirements. For such a user device, the network may determine to initiate a DC-based SCG change, so as to reduce the interruption time due to the cell switch.

In some example embodiments, as shown in FIG. 4, the first network device 115 may send (440), to the user device 105, an inter-SN switching configuration for the DC-based SCG change. Correspondingly, the user device 105 may receive (445), from the first network device 115, the inter-SN switching configuration for the DC-based SCG change. Herein, inter-SN switching may also be referred to as inter-SN LTM. In some example embodiments, the inter-SN switching configuration may be sent to the user device 105 via RRC signaling. Some example embodiments in this regard will be detailed in the following paragraphs with reference to FIGS. 8 and 11.

Then, the user device 105 may initiate (450) a cell switch from the first cell 110 to the second cell 120 based on the inter-SN switching configuration. In some example embodiments, the inter-SN switching configuration may comprise at least one SCG configuration of at least one candidate cell. The at least one candidate cell may include the second cell 120. Thus, the user device 105 may switch to the second cell 120 based on the SCG configuration of at least one candidate cell.

In some example embodiments, during a subsequent cell switch, the user device 105 may replace a SCG configuration of the second cell 120 with a further SCG configuration of a different third cell provided by a further network device. For example, as the user device 105 moves further towards the third cell 130 provided by the third network device 135, the user device 105 may replace the SCG configuration of the second cell 120 with the SCG configuration of the third cell 130.

In some example embodiments, all candidate configurations may be prepared as DC configurations with target cells as PSCells. The SCG configurations may be prepared as a complete configuration or as a reference delta configuration. The inter-SN switching configuration may include all the candidate configurations. During initial cell switching, the MCG is suspended as described above. For subsequent cell switching, the user device 105 may replace the SCG configuration using a target SCG configuration which may be a complete configuration or a reference delta configuration.

In some example embodiments, if the initial PCell/MCG or MN configuration (for example, of the first cell 110 as a PCell) is released (e.g. release of the MN-PDCP), for example, via RRC reconfiguration, the network may configure a role switch to convert a current serving cell of the SN (for example, the second cell 120 operating as PSCell) to a PCell. This may result in relocation of a PDCP anchor. For example, a PDCP entity may be relocated or re-anchored at the second network device 125. As part of this reconfiguration, other candidate configurations may also be prepared as DC configurations using the current serving cell as the PCell.

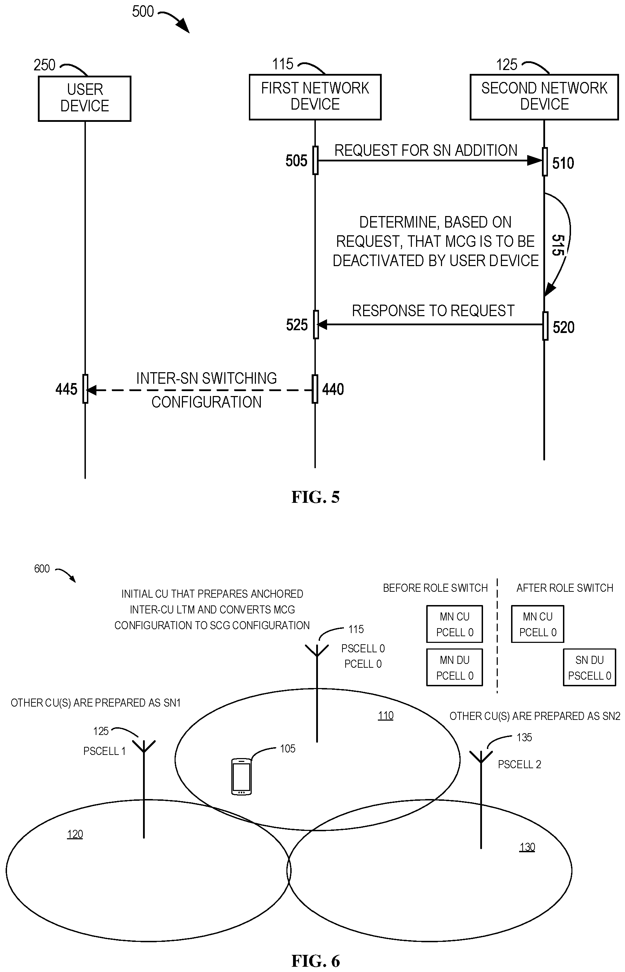

To support the DC-based SCG change of the user device 105, there may be a need for interaction between the first network device 115 as a source MN and the second network device 125 as a target SN. Some example embodiments in this regard will be described below with reference to FIG. 5.

FIG. 5 illustrates an example signaling flow 500 of the DC-based SCG change method according to some example embodiments. The signaling flow 700 involves the first network device 115, which may operate as a source MN of the user device 105; and the second network device 125, which may operate as a target SN of the user device 105.

As shown in FIG. 5, the first network device 115 sends (505), to the second network device 125, a request for SN addition, and the request indicates that the SN addition is used for the DC-based SCG change of the user device 105. Correspondingly, the second network device 125 receives (510), from the first network device 115, the request for SN addition.

Based on the request, the second network device 125 determines (515) that an MCG is to be deactivated by the user device 105 for the DC-based SCG change. Then, the second network device 125 sends (520) a response to the request to the first network device 115. Correspondingly, the first network device 115 receives (525) from the second network device 125, the response to the request. In some example embodiments, the request sent (505) from the first network device 110 to the second network device 125 may identify the second cell 120 provided by the second network device 125. In these example embodiments, the response to the request may include a SCG configuration of the second cell 120 based on the determining (515) of the second network device 125. For example, the second network device 125 may provide a PSCell configuration knowing that an MCG for the user device 105 will be suspended.

In some example embodiments, the request may indicate that a MN terminated bearer is to be used for the user device 105 and a SCG bearer is to be allocated by the second network device 125 for the MN terminated bearer. Accordingly, the SCG configuration included in the response to the request may exclude an SRB (for example, SRB3) for a SCG including the second cell 120.

After receiving (525) the response from the second network device 125, the first network device 115 sends (440) the inter-SN switching configuration to the user device 105. The inter-SN switching configuration may comprise the SCG configuration of the second cell 120 that may be included in the response from the second network device 125.

In some example embodiments, the SCG configuration may include a SCG RLF configuration to be used for triggering a re-establishment procedure. For example, as mentioned above, if the user device 105 detects an SCG RLF, then based on the SCG RLF configuration, the user device 105 may trigger a re-establishment procedure. The user device 105 may consider the SCG RLF as MCG RLF.

The DC-based SCG change may be initiated in various UE mobility scenarios. In an example scenario, the DC-based SCG change may be triggered when the user device 105 stays at a serving cell such as the first cell 110. Some example embodiments in this scenario will be described below with reference to FIGS. 6 to 8.

FIG. 6 shows an example scenario 600 of triggering the DC-based SCG change according to some example embodiments. In the scenario 600, the DC-based SCG change happens when the user device 105 stays at the first cell 110 as a serving cell.

As shown in FIG. 6, the user device 105 is located in the first cell 110, denoted by PCell0. Initially, the user device 105 may be served by the first network device 115 that may operate as an MN. In the case that the first network device 115 operates in a RAN split architecture including a CU and a DU, the user device 105 may be served by an MN CU and an MN DU in PCell0. When the network initiates the DC-based SCG change, PCell0 may be added to SCG as a PSCell denoted by PSCell0. Accordingly, the first network device 115 may be added as an SN. Then, the user device 105 may be served by the MN CU in PCell0 and by an SN DU in PSCell0. Moreover, other network devices (for example, the second network device 125 and the third network device 135) may be prepared as SNs. As the user device 105 moves towards the second cell 120 (denoted by PSCell1), the inter-SN LTM may be triggered. In this case, the user device 105 may perform a PSCell change from PSCell0 to PSCell1.

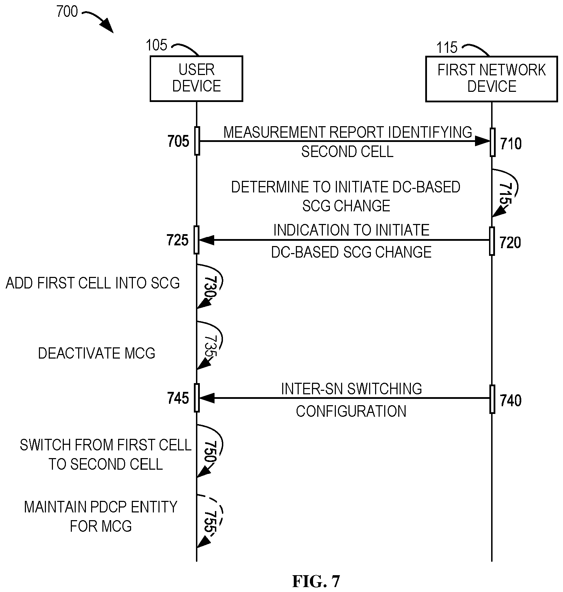

FIG. 7 illustrates an example signaling flow 700 of the DC-based SCG change in the scenario 600 according to some example embodiments. As shown in FIG. 7, the user device 105 operating in a single connectivity (SC) mode sends (705) to the first network device 115 a measurement report identifying the second cell 120 provided by the second network device 125. Correspondingly, the first network device 115 receives (710) this measurement report from the user device 105. In some example embodiments, the measurement report may comprise L1, L2 or L3 measurement report.

Based on the measurement report, the first network device 115 determines (715) to initiate a DC-based SCG change for the user device 105. Then, the first network device 115 sends (720) to the user device 105 an indication to initiate a DC-based SCG change. Correspondingly, the user device 105 receives (725) this indication from the first network device 115. Based on the indication, the user device 105 adds (730) the first cell 110 into an SCG and deactivates (735) an MCG including the first cell 110.

The first network device 115 further sends (740) an inter-SN switching configuration to the user device 105. Correspondingly, the user device 105 receives (745) the inter-SN switching configuration from the first network device 115. Based on this configuration, the user device 105 switches (750) from the first cell 110 to the second cell 120. In some example embodiments, the user device 105 may maintain a PDCP entity for the MCG.

In some example embodiments, the indication to indicate a DC-based SCG change may be carried in RRC signaling such as a RRC reconfiguration message. After receiving (725) the RRC reconfiguration message, the user device 105 may perform a random access procedure with the first network device 115 to convert the first cell 110 to a PSCell. Then, the user device 105 may send a RRC reconfiguration complete message to the first network device 115.

In some other example embodiments, random access free PSCell addition may be allowed. In these example embodiments, the user device 105 may add the first cell 110 to a PSCell without a random access procedure. In this case, after receiving the RRC reconfiguration message, the user device 105 may send a RRC reconfiguration complete message to the first network device 115, without a random access procedure with the first network device 115 to convert the first cell 110 to a PSCell.

In some example embodiments, during a subsequent cell switch, the user device 105 may replace a SCG configuration of the second cell 120 with a further SCG configuration of a further cell provided by a further network device. The further cell may be the third cell 130 provided by the third network device 135. Alternatively, or in addition, further cell may be the first cell 110. For example, when the user device 105 moves back to the first cell 110, the user device 105 may use the SCG configuration of the first cell 110 prepared during the initial cell switch, to replace the SCG configuration of the second cell 120.

It is to be understood all operations and/or features related to the user device 105 and the first network device 115 as described above with reference to FIG. 4 are likewise applicable to the signaling flow 700 and have similar effects. For the purpose of simplification, the details will not be repeated.

To support the DC-based SCG change of the user device 105 in the scenario 600, some interactions may be needed between the first network device 115 as a source MN and the second network device 125 as a target SN. All operations and/or features related to the first network device 115 and the second network device 125 as described above with reference to FIG. 5 are likewise applicable in the scenario 600 and have similar effects. For the purpose of simplification, the details will not be repeated.

An example process in the scenario 600 will be described below with reference to FIG. 8. In a process 800 as shown in FIG. 8, the user device 105 may operate (801) in a SC with the first network device 115 as an MN, and has two MN terminated MCG bearers such as DRB-1 and DRB-2. The user device 105 may send (803) an L3 measurement report to identify neighbor cells from other network devices such as gNBs. For example, the user device 105 may send, to the first network device 115, a measurement report identifying the second cell 120 provided by the second network device 125.

The first network device 115 may determine (805), based on the measurement report, to initiate anchored inter-CU LTM for the user device 250. In other words, the first network device 115 may decide that it has to use an anchored inter-CU LTM procedure for the user device 105. The decision may be made by the first network device 115 based on the QoS requirements of the user device 105. For example, in order to support the QoS of the user device 105, the first network device 115 may decide to initiate the anchored inter-CU LTM procedure to avoid PDCP reset and decrease interruption time.

In some example embodiments, before configuring the target cell configurations, the first network device 115 may convert a SC configuration of the user device 105 to a DC configuration by adding a PCell (e.g., the first cell 110) as a PSCell and disabling an MCG configuration. Later on in the second phase, the first network device 115 may prepare candidate network devices for inter-SN LTM.

The first network device 115 as the source network device may send (807), to the user device 105, an indication to initiate the anchored inter-CU LTM. For example, the indication may be sent with a RRC reconfiguration message (also referred to as *"RRC reconfiguration*")*.* Correspondingly, the user device 105 may receive (809), from the first network device 115, *RRC reconfiguration* to indicate initiating the anchored inter-CU LTM, adding a PCell as a PSCell for an SCG, removing an MCG configuration, and/or stopping RLF and BFD for the MCG.

The user device 105 may apply (811) the anchored inter-CU LTM configuration as indicated by *RRCReconfiguration* message. For example, the user device 105 may reset RLC, MAC and PHY entities for the MCG. The user device 105 may stop RLM for the MCG. For example, any measurement related to RLM may be stopped. The user device 105 may stop BFD for the MCG. For example, any measurement related to BFD may be stopped. The user device 105 may add a current PCell (serving cell, for example, the first cell 110) as a PSCell. The user device 105 may trigger reestablishment if an SCG RLF is detected. The user device 105 may stop MCG measurements. The user device 105 may need to be configured with a split bearer for SRB1 as an SRB for the MCG. The user device 105 may need to convert all bearers to MN terminated SCG bearers. The user device 105 may convert SRB1 to a split bearer (also referred to as an SRB1 split bearer or split SRB 1) and disable a part of the SRB1 split bearer for the MCG.

The user device 105 may perform (813) a random access procedure with the first network device 115 to convert the first cell 110 to a PSCell. For example, the user device 105 may initiate random access to the PCell to initiate the conversion of the PCell to the PSCell. This may be done if there is no random access free PSCell addition. Alternatively, if a random access free PSCell addition is allowed, the random access may be skipped, and the user device 105 may add the PCell as the PSCell without a random access procedure.

If a random access procedure is used, the first network device 115 may receive (815) a random access request from the user device 105. The first network device 115 may send (817) a random access response (RAR) to the user device 105. Correspondingly, the user device 105 may receive (819), from the first network device 115, the RAR over the PSCell. Then, the user device 105 may send (821) a RRC reconfiguration complete message (also referred to as *RRCReconfiguration* complete) to the first network device 115, for example, on an SCG bearer of split SRB1. This may complete the conversion of the single connectivity configuration of the user device 105 to the anchored inter-CU LTM configuration. Through this, the security and PDCP may be anchored on the first network device 115 which operates as MN. The radio link may be flexibly changed over a PSCell change enabled over the DC-based SCG change.

After the conversion of the PCell to the PSCell or at the same time or before, the first network device 115 as a source MN that acts as source SN, may send (825) a request for SN addition (also referred to as an SN addition request) to the second network device 125 to initiate an SN addition procedure towards the second network device 125 which operates as a target SN. Correspondingly, the second network device 120 may receive (827) the SN addition request. In the SN addition procedure, the first network device 115 may indicate that this SN addition is for an anchored inter-CU LTM procedure. Moreover, the first network device 115 as the source MN may indicate that MN terminated bearers will be used and asks the second network device 125 to allocate SCG bearers for the MN terminated bearers.

The second network device 125 may determine (829) that the user device 105 will disable the MCG during anchored inter-CU LTM operation. The "anchored inter-CU LTM" procedure may be used by the second network device 125 to provide the PSCell configuration knowing that the MCG will be suspended. In an example, the second network device 125 may add a SCG RLF configuration for triggering a re-establishment procedure as mentioned above. Optionally, SRB3 (as an SRB for the SCG) may not be configured by the second network device 125 to avoid PDCP re-configuration during a PSCell change. The second network device 125 may send (831) SN addition request acknowledgement (ACK) which is a response to the SN addition request.

The first network device 115 may send (835), to the user device 105, an inter-SN LTM configuration, for example, via RRC signaling such as an RRC Reconfiguration message. For example, the first network device 115 may configure the user device 105 with *RRCReconfiguration* to add the inter-SN LTM configuration. Correspondingly, the user device 105 may receive (837) *RRCReconfiguration* including the inter-SN LTM configuration. Then, the user device 105 may send (839) *RRCReconfiguration* complete to the first network device 115, for example, on an SCG bearer of the split SRB1 to acknowledge reception of the inter-SN LTM configuration. Corresponding, the first network device 115 may receive (841) the *RRCReconfiguration* complete.

The user device 105 may execute (843) inter-SN LTM with no need for security reset as the PDCP entity is terminated in the first network device 115. For example, the user device 105 may use an inter-SN LTM procedure to move between cells and avoid PDCP reset and security update, as there is no SN terminated bearer and MN is kept the same as the anchor and MN terminated bearers keep using the same key.

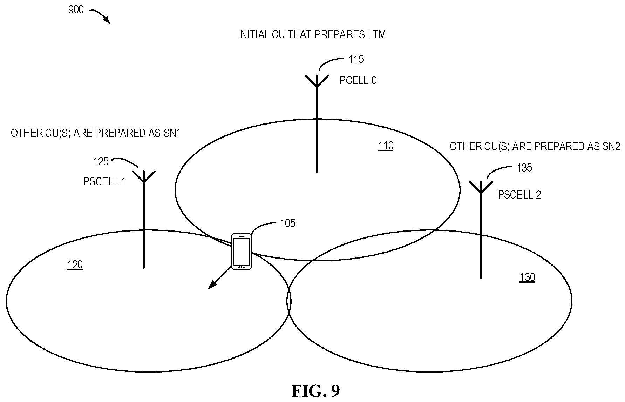

In addition to the scenario 600, the DC-based SCG change may be triggered in another scenario when the user device 105 is at the border of a current serving cell (for example, the first cell 110) and about to execute LTM to a target cell (for example, the second cell 120). Some example embodiments in this scenario will be described below with reference to FIGS. 9 to 11.

FIG. 9 shows an example scenario 900 of triggering the DC-based SCG change according to some other example embodiments. In the scenario 900, the DC-based SCG change happens during the LTM execution, e.g. when user device 105 is at or close to the border of the first cell 110 and about to execute LTM to the second cell 120.

As shown in FIG. 9, the user device 105 is located in the first cell 110 (which is a serving cell), denoted by PCell0, and moves to the second cell 120 as a target cell. Initially, the user device 105 may be served by the first network device 115 that may operate as an MN. In the case that the first network device 115 operates in a RAN split architecture including a CU and a DU, the user device 105 may be served by an MN CU in PCell0. As the user device 105 moves towards the second cell 120 and arrives at the border of the first cell 110, the network may initiate the DC-based SCG change. In this case, other network devices (for example, the second network device 125 and the third network device 135) may be prepared as SNs. If the user device 105 moves under coverage of one of the SNs, the user device 105 may perform SN addition without interruptions and disable all MCG bearers. For example, when the user device 105 moves into the second cell 120, the user device 105 may add the second cell 120 as a PSCell denoted by PSCell 1 while deactivating all MCG bearers.

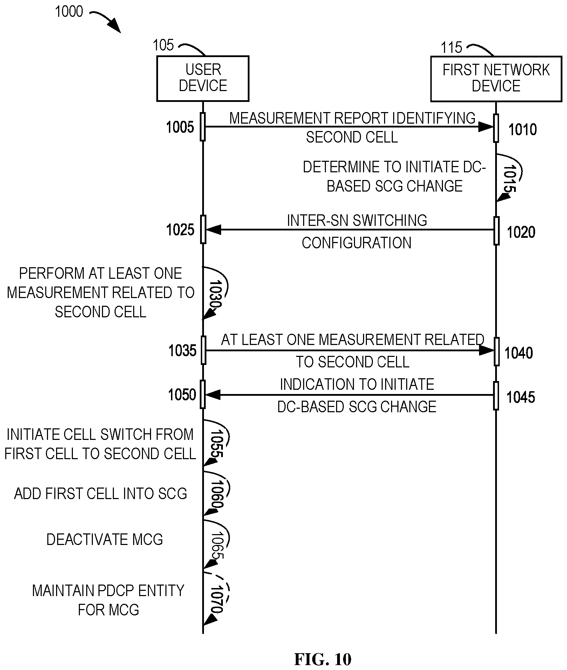

FIG. 10 illustrates an example signaling flow 1000 of the DC-based SCG change in the scenario 900 according to some example embodiments. As shown in FIG. 10, the user device 105 operating in a SC mode sends (1005) to the first network device 115 a measurement report identifying the second cell 120 provided by the second network device 125. Correspondingly, the first network device 115 receives (1010) this measurement report from the user device 105. In some example embodiments, the measurement report may comprise L1, L2 or L3 measurement report.

Based on the measurement report, the first network device 115 determines (1015) to initiate a DC-based SCG change for the user device 105. The first network device 115 sends (1020) an inter-SN switching configuration to the user device 105. Correspondingly, the user device 105 receives (1025) the inter-SN switching configuration from the first network device 115. For example, the inter-SN switching configuration may be carried in RRC and/or MAC signaling.

The user device 105 performs (1030) at least one measurement related to the second cell 120 and then sends (1035) the at least one measurement to the first network device 115. Correspondingly, the first network device 115 receives (1040) the at least one measurement from the user device 105. Then, the first network device 115 sends (1045) to the user device 105, an indication to initiate a DC-based SCG change. Correspondingly, the user device 105 receives (1050) this indication from the first network device 115. For example, the indication to initiate a DC-based SCG change may be carried in RRC and/or MAC signaling.

In some example embodiments, the inter-SN switching configuration may also be used to configure a DC-based SCG change. For example, the inter-SN switching configuration may be sent (1020) by the first network device 110 in RRC signaling, to indicate that a DC-based SCG change is configured for the user device 105. Then, the DC-based SCG change may be activated by the first network device 115 using an MAC control element (CE) that includes the indication to initiate the DC-based SCG change.

After receiving (1050) this indication, the user device 105 initiates (1055) a cell switch from the first cell 110 to the second cell 120 based on the inter-SN switching configuration received (1025) from the first network device 115. The user device 105 adds (1060) the second cell 110 into an SCG and deactivates (1065) an MCG including the first cell 110. In some example embodiments, the user device 105 may maintain a PDCP entity for the MCG.

In some example embodiments, the user device 105 may perform a random access procedure with the second network device 125 to convert the second cell 120 to a PSCell. Then, the user device 105 may send a RRC reconfiguration complete message to the second network device 115. In some other example embodiments, random access free PSCell addition may be allowed. In these example embodiments, the user device 105 may add the second cell 120 as a PSCell to SCG without a random access procedure. In this case, the user device 105 may send a RRC reconfiguration complete message to the second network device 125 directly, without a random access procedure with the second network device 125 to add the second cell 120 as a PSCell.

It is to be understood all operations and/or features related to the user device 105 and the first network device 115 as described above with reference to FIGS. 4 and 7 are likewise applicable to the signaling flow 1000 and have similar effects. For the purpose of simplification, the details will not be repeated.

To support the DC-based SCG change of the user device 105 in the scenario 900, some interactions may be needed between the first network device 115 as a source MN and the second network device 125 as a target SN. All operations and/or features related to the first network device 115 and the second network device 125 as described above with reference to FIG. 5 are likewise applicable in the scenario 900 and have similar effects. For the purpose of simplification, the details will not be repeated.

An example process in the scenario 900 will be described below with reference to FIG. 11. In a process 1100 as shown in FIG. 11, the user device 105 may operate (1101) in a SC with first network device 115 as an MN, and has two MN terminated MCG bearers such as DRB-1 and DRB-2. The user device 105 may send (1103) an L3 measurement report to identify neighbor cells from other network devices such as gNBs.

The first network device 115 may determine (1105) to initiate anchored inter-CU LTM for the user device 250 due to the QoS requirements of the user device 105. For example, in order to support the QoS of the user device 105, the first network device 115 may decide to initiate an anchored inter-CU LTM procedure to avoid PDCP reset and decrease interruption time. Different from the process 800, there is no role change of the source cell (for example, the first cell 110) in the process 1100. The first network device 115 may prepare candidate network devices for inter-SN LTM.

In the process 1100, the first network device 115 may perform interruption-free SN addition procedures first since the user device 105 is about to lose coverage of the serving cell (for example, the first cell 110). As shown in FIG. 11, the first network device 115, which may operate as a source MN, may send (1107), to the second network device 125, an SN addition request to initiate an SN addition procedure towards the second network device 125 which may operate as a target MN. Correspondingly, the second network device 125 may receive (1109) the SN addition request from the first network device 115. In the SN addition procedure, the first network device 115 may indicate that this SN addition is for an anchored inter-CU LTM procedure. Moreover, the first network device 115 as the source MN may indicate that MN terminated bearers will be used and asks the second network device 125 to allocate SCG bearers for the MN terminated bearers.

The second network device 125 may determine (1111) that the user device 105 will disable the MCG during anchored inter-CU LTM operation. The subsequent operations (1113, 1115) of the first network device 115 and the second network device 125 in the process 1100 are similar to those in the process 800, and the details thereof will not be repeated.

Then, the first network device 115 and the user device 105 may communicate (1117, 1119) an RRC reconfiguration message including an inter-SN switching configuration, and then communicate (1121, 1123) an RRC reconfiguration complete message, as the first network device 115 and the user device 105 behaves (835, 837, 839, 841) in the process 800.

After that, as the user device 105 moves (1125), the user device 105 slowly loses coverage of the source cell (for example, the first cell 110). The user device 105 may start measuring candidate cells. The user device may start measuring according to the inter-SN switching configuration. In this example, the user device 105 moves under coverage of the second network device 125. The user device 105 may perform (1127) candidate cell measurements under the second network device 125 and send (1129) an L1 measurement report under an MCG to the first network device 115, to report the candidate cell (for example, the second cell 120) measurements under the second network device 125. Correspondingly, the first network device 115 may receive (1131) this measurement report from the user device 105.

The first network device 115 may determine (1133), based on the measurement report, to initiate anchored inter-CU LTM for the user device 105 due to the QoS requirements of the user device 105. Then, the first network device 115 may send (1135), to the user device 105, a MAC CE to trigger an anchored inter-CU LTM procedure. The MAC CE may indicate to trigger SCG addition and deactivating an MCG.

After the user device 105 receives (1137) the MAC CE, the user device 105 may apply (1139) the anchored inter-CU LTM configuration as indicated by MAC CE. The operations of the user device 105 are similar to those in the process 800 / 811, and the details thereof will not be repeated.

Then, the user device 105 may initiate (1141) random access with the second network device 125 to initiate the conversion of the second cell 120 to a PSCell. Correspondingly, the second network device 125 may receive (1143) a random access request from the user device 105. The access procedure is performed if there is no random access free PSCell addition. Alternatively, if a random access free PSCell addition is allowed, the random access may be skipped.

The second network device 125 may send (1145) an RAR to the user device 105. Correspondingly, the user device 105 may receive (1147), from the second network device 125, the RAR over PSCell. Then, the user device 105 may send (1149) an RRC reconfiguration complete message to the second network device 125 on an SCG bearer of the split SRB1. This completes the conversion of the connection of the user device 105 to the anchored inter-CU LTM configuration.

Through this, the security and PDCP may be anchored on an MN (for example, the first network device 115), and the radio link will be flexibly changed over a PSCell change that may be enabled over inter-SN LTM. Subsequently, the user device 105 may use an inter-SN LTM procedure to move between cells and avoid PDCP reset and security update as there is no SN terminated bearer and the MN is kept the same as the anchor and MN terminated bearers keep using the same key.

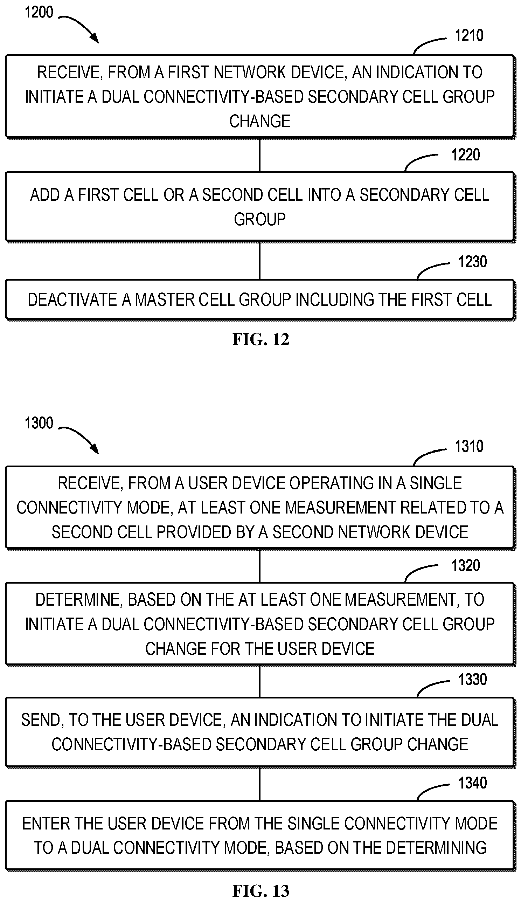

FIG. 12 shows a flowchart of an example method 1200 implemented at a user device in accordance with some example embodiments. For the purpose of discussion, the method 1200 will be described from the perspective of the user device 105.

At block 1210, the user device 105 receives, from a first network device, an indication to initiate a dual connectivity-based secondary cell group change.

At block 1220, the user device 105 adds a first cell or a second cell into a secondary cell group based on the indication, the first cell being provided by the first network device and serving the user device, and the second cell being provided by the second network device.

At block 1230, the user device 105 deactivates a master cell group including the first cell.

In some example embodiments, the user device 105 may maintain a packet data convergence protocol entity for the master cell group.

In some example embodiments, the user device 105 may trigger a re-establishment procedure based on detecting a radio link failure for the secondary cell group.

In some example embodiments, the user device 105 may perform, based on the indication, at least one of: resetting at least one of a radio link control entity, a media access control entity or a physical layer entity for the master cell group; stopping at least one of radio link monitoring or radio link failure detection for the master cell group; stopping beam failure detection for the master cell group; stopping a measurement on the master cell group; considering a radio link failure for the secondary cell group as a radio link failure for the master cell group; or converting a signaling radio bearer for the master cell group to a split bearer for both the master cell group and the secondary cell group, where a part of the split bearer corresponding to the master cell group is disabled.

In some example embodiments, the user device 105 may receive, from the first network device, an inter-secondary node switching configuration for the dual connectivity-based secondary cell group change; and initiate a cell switch from the first cell to the second cell based on the inter-secondary node switching configuration.

In some example embodiments, the inter-secondary node switching configuration may comprise at least one secondary cell group configuration of at least one candidate cell, the at least one candidate cell including the second cell.

In some example embodiments, the inter-secondary node switching configuration may be sent to the user device via radio resource control signaling.

In some example embodiments, the user device 105 may perform at least one measurement related to the second cell; and report the at least one measurement to the first network device, where the indication is received from the first network device after reporting the at least one measurement.

In some example embodiments, the indication may be received via at least one of radio resource control signaling or media access control signaling.

In some example embodiments, the user device 105 may replace a secondary cell group configuration of the second cell with a further secondary cell group configuration of a different third cell provided by a further network device.

FIG. 13 shows a flowchart of an example method 1300 implemented at a first network device in accordance with some example embodiments. For the purpose of discussion, the method 1300 will be described from the perspective of the first network device 115.

At block 1310, the first network device 115 receives, from a user device operating in a single connectivity mode, at least one measurement related to a second cell provided by a second network device.

At block 1320, the first network device 115 determines, based on the at least one measurement, to initiate a dual connectivity-based secondary cell group change for the user device.

At block 1330, the first network device 115 sends, to the user device, an indication to initiate the dual connectivity-based secondary cell group change.

At block 1340, the first network device 115 enters the user device from the single connectivity mode to a dual connectivity mode, based on the determining.

In some example embodiments, the determining may be based on a quality of service requirement of the user device.

In some example embodiments, the first network device 115 may send, to the user device, an inter-secondary node switching configuration for the dual connectivity-based secondary cell group change.

In some example embodiments, the inter-secondary node switching configuration may comprise at least one secondary cell group configuration of at least one candidate cell, the at least one candidate cell including the second cell.

In some example embodiments, the inter-secondary node switching configuration may be sent to the user device via radio resource control signaling.

In some example embodiments, the first network device 115 may send, to the second network device, a request for secondary node addition, the request indicating that the secondary node addition is used for the dual connectivity-based secondary cell group change; and receive, from the second network device, a response to the request, where the inter-secondary node switching configuration is sent to the user device after receiving the response.

In some example embodiments, the response may include a secondary cell group configuration of the second cell.

In some example embodiments, the request may further indicate that a master node terminated bearer is to be used for the user device and a secondary cell group bearer is to be allocated by the second network device for the master node terminated bearer.

In some example embodiments, the indication may be sent to the user device via at least one of radio resource control signaling or medium access control signaling.

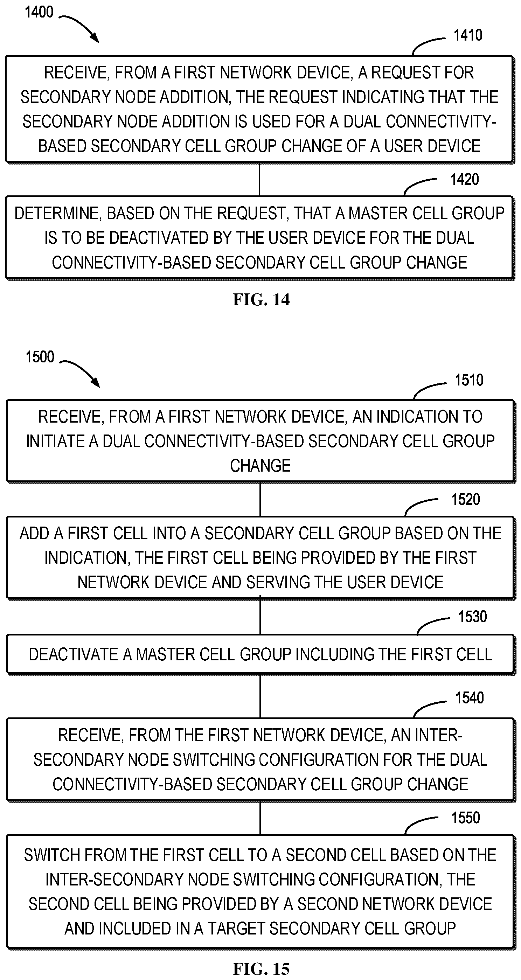

FIG. 14 shows a flowchart of an example method 1400 implemented at a second network device in accordance with some example embodiments. For the purpose of discussion, the method 1400 will be described from the perspective of the second network device 125.

At block 1410, the second network device 125 receives, from a first network device, a request for secondary node addition, the request indicating that the secondary node addition is used for a dual connectivity-based secondary cell group change of a user device.

At block 1420, the second network device 125 determines, based on the request, that a master cell group is to be deactivated by the user device for the dual connectivity-based secondary cell group change.

In some example embodiments, the request may further indicate that a master node terminated bearer is to be used for the user device and a secondary cell group bearer is to be allocated by the second network device for the master node terminated bearer.

In some example embodiments, the request may identify a second cell provided by the second network device, and in some example embodiments, the second network device 125 may send, to the first network device, a secondary cell group configuration of the second cell, based on the determining.

In some example embodiments, the secondary cell group configuration may include a secondary cell group radio link failure configuration to be used for triggering a re-establishment procedure.

In some example embodiments, the secondary cell group configuration may exclude a signaling radio bearer for a secondary cell group including the second cell.

In some example embodiments, a first apparatus capable of performing the method 1200 may comprise means for performing the respective operations of the method 1200 and/or any of the described one or more example embodiments thereof. The means may be implemented in any suitable form. For example, the means may be implemented in a circuitry or software module. The first apparatus may be implemented as or included in the user device 105.

In some example embodiments, a second apparatus capable of performing the method 1300 may comprise means for performing the respective operations of the method 1300 and/or any of the described one or more example embodiments thereof. The means may be implemented in any suitable form. For example, the means may be implemented in a circuitry or software module. The second apparatus may be implemented as or included in the first network device 115.

In some example embodiments, a third apparatus capable of performing the method 1400 may comprise means for performing the respective operations of the method 1400 and/or any of the described one or more example embodiments thereof. The means may be implemented in any suitable form. For example, the means may be implemented in a circuitry or software module. The third apparatus may be implemented as or included in the second network device 125.

FIG. 15 shows a flowchart of an example method 1500 implemented at a user device in accordance with some example embodiments. For the purpose of discussion, the method 1500 will be described from the perspective of the user device 105.

At block 1510, the user device 105 receives, from a first network device, an indication to initiate a dual connectivity-based secondary cell group change.

At block 1520, the user device 105 adds a first cell into a secondary cell group based on the indication, the first cell being provided by the first network device and serving the user device.

At block 1530, the user device 105 deactivates a master cell group including the first cell.

At block 1540, the user device 105 receives, from the first network device, an inter-secondary node switching configuration for the dual connectivity-based secondary cell group change.

At block 1550, the user device 105 switches from the first cell to a second cell based on the inter-secondary node switching configuration, the second cell being provided by a second network device and included in a target secondary cell group.

In some example embodiments, the user device 105 may maintain a packet data convergence protocol entity for the master cell group.

In some example embodiments, the user device 105 may perform, based on the indication, at least one of: resetting at least one of a radio link control entity, a media access control entity or a physical layer entity for the master cell group; stopping at least one of radio link monitoring or radio link failure detection for the master cell group; stopping beam failure detection for the master cell group; stopping a measurement on the master cell group; triggering a re-establishment procedure based on detecting a radio link failure for the secondary cell group; or converting a signaling radio bearer for the master cell group to a split bearer for both the master cell group and the secondary cell group, where a part of the split bearer corresponding to the master cell group is disabled.

In some example embodiments, the user device 105 may send, to the first network device, a measurement report identifying the second cell, where the indication is received from the first network device after sending the measurement report.

In some example embodiments, the indication may be received via radio resource control signaling.

In some example embodiments, the indication may be carried in a radio resource control reconfiguration message.

In some example embodiments, the user device 105 may, responsive to receiving the radio resource control reconfiguration message, perform a random access procedure with the first network device to convert the first cell to a primary secondary cell; and send a radio resource control reconfiguration complete message to the first network device.

In some example embodiments, the user device 105 may, responsive to receiving the radio resource control reconfiguration message, send a radio resource control reconfiguration complete message to the first network device, without a random access procedure with the first network device to convert the first cell to a primary secondary cell.

In some example embodiments, the inter-secondary node switching configuration may comprise at least one secondary cell group configuration of at least one candidate cell, the at least one candidate cell including the second cell.

In some example embodiments, the inter-secondary node switching configuration may be sent to the user device via radio resource control signaling.

In some example embodiments, the user device 105 may replace a secondary cell group configuration of the second cell with a further secondary cell group configuration of a further cell provided by a further network device, where the further cell is the first cell or a third cell.

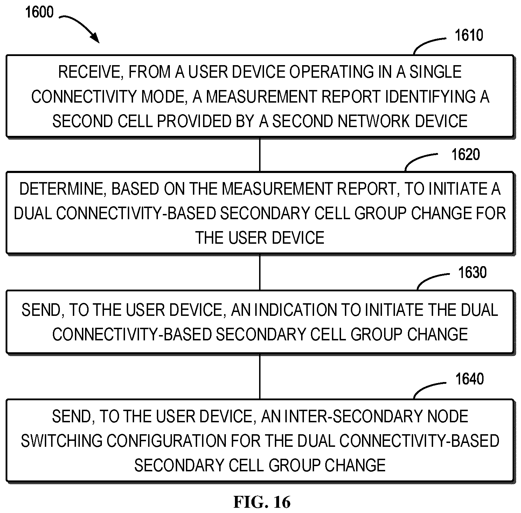

FIG. 16 shows a flowchart of an example method 1600 implemented at a first network device in accordance with some example embodiments. For the purpose of discussion, the method 1600 will be described from the perspective of the first network device 115.

At block 1610, the first network device 115 receives, from a user device operating in a single connectivity mode, a measurement report identifying a second cell provided by a second network device.

At block 1620, the first network device 115 determines, based on the measurement report, to initiate a dual connectivity-based secondary cell group change for the user device.

At block 1630, the first network device 115 sends, to the user device, an indication to initiate the dual connectivity-based secondary cell group change.

At block 1640, the first network device 115 sends, to the user device, an inter-secondary node switching configuration for the dual connectivity-based secondary cell group change.

In some example embodiments, the determining may be based on a quality of service requirement of the user device.

In some example embodiments, the first network device 115 may enter the user device from the single connectivity mode to a dual connectivity mode, based on the determining.

In some example embodiments, the first network device 115 may add a first cell into a secondary cell group of the user device based on the determining, the first cell being provided by the first network device and serving the user device; and disable a master cell group of the user device including the first cell.

In some example embodiments, the first network device 115 may send, to the second network device, a request for secondary node addition, the request indicating that the secondary node addition is used for the dual connectivity-based secondary cell group change; and receive, from the second network device, a response to the request, where the inter-secondary node switching configuration is sent to the user device after receiving the response.

In some example embodiments, the response may include a secondary cell group configuration of the second cell.

In some example embodiments, the request may further indicate that a master node terminated bearer is to be used for the user device and a secondary cell group bearer is to be allocated by the second network device for the master node terminated bearer.

In some example embodiments, the inter-secondary node switching configuration comprises at least one secondary cell group configuration of at least one candidate cell, the at least one candidate cell including the second cell.

In some example embodiments, the inter-secondary node switching configuration may be sent to the user device via radio resource control signaling.

In some example embodiments, the indication may be sent to the user device via radio resource control signaling.

In some example embodiments, the indication may be carried in a radio resource control reconfiguration message.

In some example embodiments, the first network device 115 may receive, from the user device, a random access request for the first cell to convert the first cell to a primary secondary cell of the user device; and receive a radio resource control reconfiguration complete message from the user device.

In some example embodiments, responsive to sending the radio resource control reconfiguration message to the user device, the first network device 115 may receive a radio resource control reconfiguration complete message from the user device, without a random access procedure of the user device.

In some example embodiments, a first apparatus capable of performing the method 1500 may comprise means for performing the respective operations of the method 1500 and/or any of the described one or more example embodiments thereof. The means may be implemented in any suitable form. For example, the means may be implemented in a circuitry or software module. The first apparatus may be implemented as or included in the user device 105.

In some example embodiments, a second apparatus capable of performing the method 1600 may comprise means for performing the respective operations of the method 1600 and/or any of the described one or more example embodiments thereof. The means may be implemented in any suitable form. For example, the means may be implemented in a circuitry or software module. The second apparatus may be implemented as or included in the first network device 115.

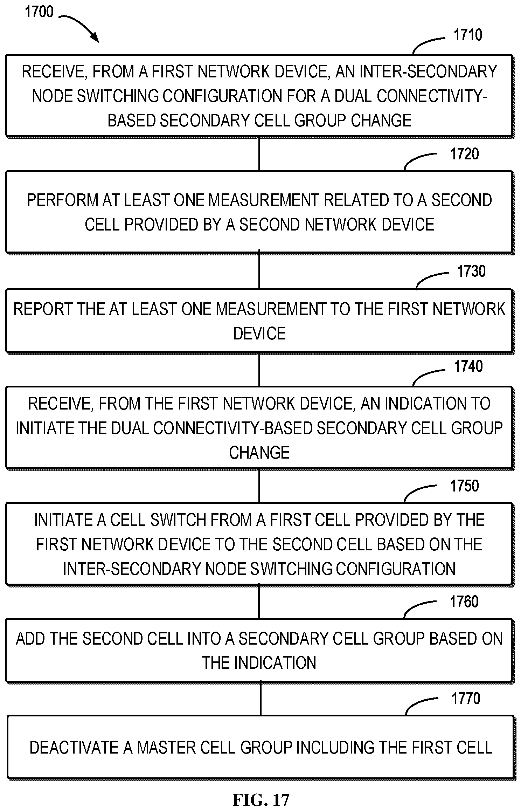

FIG. 17 shows a flowchart of an example method 1700 implemented at a user device in accordance with some example embodiments. For the purpose of discussion, the method 1700 will be described from the perspective of the user device 105.

At block 1710, the user device 105 receives, from a first network device, an inter-secondary node switching configuration for a dual connectivity-based secondary cell group change.

At block 1720, the user device 105 performs at least one measurement related to a second cell provided by a second network device.

At block 1730, the user device 105 reports the at least one measurement to the first network device.

At block 1740, the user device 105 receives, from the first network device, an indication to initiate the dual connectivity-based secondary cell group change.

At block 1750, the user device 105 initiates a cell switch from a first cell provided by the first network device to the second cell based on the inter-secondary node switching configuration.

At block 1760, the user device 105 adds the second cell into a secondary cell group based on the indication.

At block 1770, the user device 105 deactivates a master cell group including the first cell.

In some example embodiments, the user device 105 may maintain a packet data convergence protocol entity for the master cell group.

In some example embodiments, the user device 105 may perform, based on the indication, at least one of: resetting at least one of a radio link control entity, a media access control entity or a physical layer entity for the master cell group; stopping at least one of radio link monitoring or radio link failure detection for the master cell group; stopping beam failure detection for the master cell group; stopping a measurement on the master cell group; triggering a re-establishment procedure based on detecting a radio link failure for the secondary cell group; or converting a signaling radio bearer for the master cell group to a split bearer for both the master cell group and the secondary cell group, where a part of the split bearer corresponding to the master cell group is disabled.

In some example embodiments, the first cell serves as a primary cell of the user device. In some example embodiments, the user device 105 may maintain a primary cell configuration of the first cell in a suspended state; and activate the primary cell configuration with a secondary cell group configuration being suspended, responsive to switching back to the first cell.

In some example embodiments, the user device 105 may send, to the first network device, a measurement report identifying the second cell, where the inter-secondary node switching configuration is received from the first network device after sending the measurement report.

In some example embodiments, the inter-secondary node switching configuration may be received via radio resource control signaling.

In some example embodiments, the indication may be received via medium access control signaling.

In some example embodiments, the user device 105 may perform a random access procedure with the second network device to convert the second cell to a primary secondary cell; and send a radio resource control reconfiguration complete message to the second network device.

In some example embodiments, the user device 105 may send a radio resource control reconfiguration complete message to the second network device, without a random access procedure with the second cell to convert the second cell to a primary secondary cell.

In some example embodiments, the inter-secondary node switching configuration may comprise at least one secondary cell group configuration of at least one candidate cell, the at least one candidate cell including the second cell.

In some example embodiments, the user device 105 may replace a secondary cell group configuration of the second cell with a further secondary cell group configuration of a different third cell provided by a further network device.

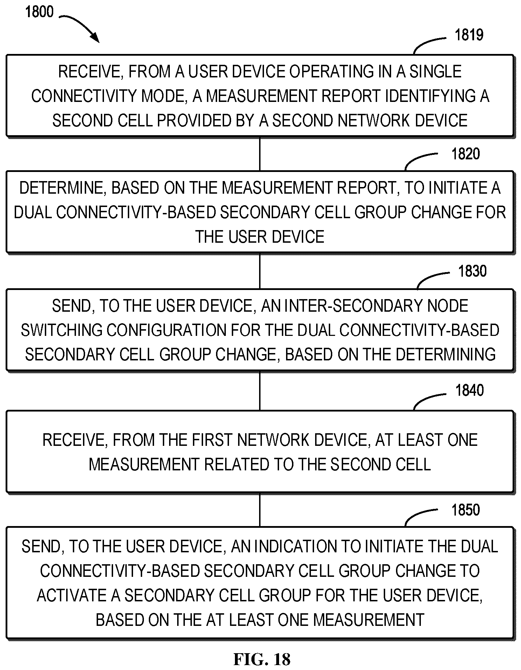

FIG. 18 shows a flowchart of an example method 1800 implemented at a first network device in accordance with some example embodiments. For the purpose of discussion, the method 1800 will be described from the perspective of the first network device 115.

At block 1810, the first network device 115 receives, from a user device operating in a single connectivity mode, a measurement report identifying a second cell provided by a second network device.

At block 1820, the first network device 115 determines, based on the measurement report, to initiate a dual connectivity-based secondary cell group change for the user device.

At block 1830, the first network device 115 sends, to the user device, an inter-secondary node switching configuration for the dual connectivity-based secondary cell group change, based on the determining.

At block 1840, the first network device 115 receives, from the first network device, at least one measurement related to the second cell.

At block 1850, the first network device 115 sends, to the user device, an indication to initiate the dual connectivity-based secondary cell group change to activate a secondary cell group for the user device, based on the at least one measurement

In some example embodiments, the determining may be based on a quality-of-service requirement of the user device.

In some example embodiments, the first network device 115 may send, to the second network device, a request for secondary node addition, the request indicating that the secondary node addition is used for the dual connectivity-based secondary cell group change; and receive, from the second network device, a response to the request, where the inter-secondary node switching configuration is sent to the user device after receiving the response.

In some example embodiments, the response may include a secondary cell group configuration of the second cell.

In some example embodiments, the request may further indicate that a master node terminated bearer is to be used for the user device and a secondary cell group bearer is to be allocated by the second network device for the master node terminated bearer.

In some example embodiments, the inter-secondary node switching configuration may comprise at least one secondary cell group configuration of at least one candidate cell, the at least one candidate cell including the second cell.

In some example embodiments, the inter-secondary node switching configuration may be sent to the user device via radio resource control signaling.

In some example embodiments, the indication may be sent to the user device via medium access control signaling.

In some example embodiments, a first apparatus capable of performing the method 1700 may comprise means for performing the respective operations of the method 1700 and/or any of the described one or more example embodiments thereof. The means may be implemented in any suitable form. For example, the means may be implemented in a circuitry or software module. The first apparatus may be implemented as or included in the user device 105.

In some example embodiments, a second apparatus capable of performing the method 1800 may comprise means for performing the respective operations of the method 1800 and/or any of the described one or more example embodiments thereof. The means may be implemented in any suitable form. For example, the means may be implemented in a circuitry or software module. The second apparatus may be implemented as or included in the first network device 115.

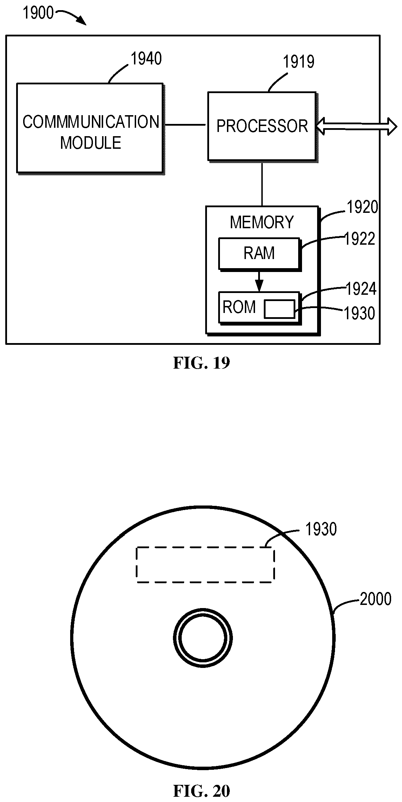

FIG. 19 is a simplified block diagram of a device 1900 that is suitable for implementing example embodiments. The device 1900 may be provided to implement a communication device. As shown, the device 1900 includes one or more processors 1910, one or more memories 1920 coupled to the processor 1910, and one or more communication modules 1940 coupled to the processor 1910.

The communication module 1940 is for bidirectional communications. The communication module 1940 has one or more communication interfaces to facilitate communication with one or more other modules or devices. The communication interfaces may represent any interface that is necessary for communication with other network elements. In some example embodiments, the communication module 1940 may include at least one antenna.

The processor 1910 may be of any type suitable to the local technical network and may include one or more of the following: general purpose computers, special purpose computers, microprocessors, digital signal processors (DSPs) and processors based on multicore processor architecture, as non-limiting examples. The device 1900 may have multiple processors, such as an application specific integrated circuit chip that is slaved in time to a clock which synchronizes the main processor.

The memory 1920 may include one or more non-volatile memories and one or more volatile memories. Examples of the non-volatile memories include, but are not limited to, a Read Only Memory (ROM) 1924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1922 and other volatile memories that will not last in the power-down duration.

A computer program 1930 includes computer executable instructions that are executed by the associated processor 1910. The instructions of the program 1930 may include instructions for performing operations/acts of some example embodiments. The program 1930 may be stored in the memory, e.g., the ROM 1924. The processor 1910 may perform any suitable actions and processing by loading the program 1930 into the RAM 1922.

The example embodiments may be implemented by means of the program 1930 so that the device 1900 may perform any process of the disclosure as discussed with reference to FIG. 6 to FIG. 20. The example embodiments may also be implemented by hardware or by a combination of software and hardware.

In some example embodiments, the program 1930 may be tangibly contained in a computer readable medium which may be included in the device 1900 (such as in the memory 1920) or other storage devices that are accessible by the device 1900. The device 1900 may load the program 1930 from the computer readable medium to the RAM 1922 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 20 shows an example of the computer readable medium 2000 which may be in form of CD, DVD or other optical storage disk. The computer readable medium 2000 has the program 1930 stored thereon.

Generally, various embodiments may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A user device comprising:
at least one processor; and
at least one memory storing instructions that, when executed by the at least one processor, cause the user device operating in single connectivity at least to:
receive, from a first network device, an inter-secondary node switching configuration for a dual connectivity-based secondary cell group change;
perform at least one measurement related to a second cell provided by a second network device;
report the at least one measurement to the first network device;
receive, from the first network device, an indication to initiate the dual connectivity-based secondary cell group change;
initiate a cell switch from a first cell provided by the first network device to the second cell based on the inter-secondary node switching configuration;
add the second cell into a secondary cell group based on the indication; and
deactivate a master cell group including the first cell.

2. The user device of claim 1, wherein the instructions, when executed by the at least one processor, further cause the user device to:
maintain a packet data convergence protocol entity for the master cell group.

3. The user device of claim 1 or 2, wherein the instructions, when executed by the at least one processor, further cause the user device to:
perform, based on the indication, at least one of:
resetting at least one of a radio link control entity, a media access control entity or a physical layer entity for the master cell group;
stopping at least one of radio link monitoring or radio link failure detection for the master cell group;
stopping beam failure detection for the master cell group;
stopping a measurement on the master cell group;
triggering a re-establishment procedure based on detecting a radio link failure for the secondary cell group; or
converting a signaling radio bearer for the master cell group to a split bearer for both the master cell group and the source secondary cell group, wherein a part of the split bearer corresponding to the master cell group is disabled.

4. The user device of any of claims 1 to 3, wherein the first cell serves as a primary cell of the user device, and wherein the instructions, when executed by the at least one processor, further cause the user device to:
maintain a primary cell configuration of the first cell in a suspended state; and
activate the primary cell configuration with a secondary cell group configuration being suspended, responsive to switching back to the first cell.

5. The user device of any of claims 1 to 4, wherein the instructions, when executed by the at least one processor, further cause the user device to:
send, to the first network device, a measurement report identifying the second cell,
wherein the inter-secondary node switching configuration is received from the first network device after sending the measurement report.

6. The user device of any of claims 1 to 5, wherein the inter-secondary node switching configuration is received via radio resource control signaling.

7. The user device of any of claims 1 to 6, wherein the indication is received via medium access control signaling.

8. The user device of any of claims 1 to 7, wherein the instructions, when executed by the at least one processor, further cause the user device to:
perform a random access procedure with the second network device to convert the second cell to a primary secondary cell; and
send a radio resource control reconfiguration complete message to the second network device.

9. The user device of any of claims 1 to 7, wherein the instructions, when executed by the at least one processor, further cause the user device to:
send a radio resource control reconfiguration complete message to the second network device, without a random access procedure with the second cell to convert the second cell to a primary secondary cell.

10. The user device of any of claims 1 to 9, wherein the inter-secondary node switching configuration comprises at least one secondary cell group configuration of at least one candidate cell, the at least one candidate cell including the second cell.

11. The user device of any of claims 1 to 10, wherein the instructions, when executed by the at least one processor, further cause the user device to:
replace a secondary cell group configuration of the second cell with a further secondary cell group configuration of a different third cell provided by a further network device w.

12. A first network device comprising:
at least one processor; and
at least one memory storing instructions that, when executed by the at least one processor, cause the first network device at least to:
receive, from a user device operating in a single connectivity mode, a measurement report identifying a second cell provided by a second network device;
determine, based on the measurement report, to initiate a dual connectivity-based secondary cell group change for the user device;
send, to the user device, an inter-secondary node switching configuration for the dual connectivity-based secondary cell group change, based on the determining;
receive, from the first network device, at least one measurement related to the second cell; and
send, to the user device, an indication to initiate the dual connectivity-based secondary cell group change to activate a secondary cell group for the user device, based on the at least one measurement.

13. The first network device of claim 12, wherein the determining is based on a quality of service requirement of the user device.

14. The first network device of any of claims 12 to 13, wherein the instructions that, when executed by the at least one processor, further cause the first network device to:
send, to the second network device, a request for secondary node addition, the request indicating that the secondary node addition is used for the dual connectivity-based secondary cell group change; and
receive, from the second network device, a response to the request,
wherein the inter-secondary node switching configuration is sent to the user device after receiving the response.

15. A second network device comprising:
at least one processor; and
at least one memory storing instructions that, when executed by the at least one processor, cause the second network device at least to:
receive, from a first network device, a request for secondary node addition, the request indicating that the secondary node addition is used for a dual connectivity-based secondary cell group change of a user device; and
determine, based on the request, that a master cell group is to be deactivated by the user device for the dual connectivity-based secondary cell group change.
